# EUROPÄISCHE PATENTSCHRIFT

(11) **EP 2 113 538 B1**
(45) Veröffentlichungstag und Bekanntmachung des Hinweises auf die Patenterteilung: **14.09.2011**
(21) Anmeldenummer: 09005928.8
(22) Anmeldetag: 29.04.2009
(51) Int. Cl.: C09D 5/44

(54) **Anodisches Tauchlacksystem**
Anodal dipping varnish system
Système de laque submersible anodique

(30) Priorität: 30.04.2008 DE 102008021830
(43) Veröffentlichungstag der Anmeldung: 04.11.2009
(73) Patentinhaber: Emil Frei GmbH & Co. KG, 78199 Bräunlingen (DE)
(72) Erfinder: Fehrenbach, Manuela, 78126 Königsfeld (DE); Gerdes, Heike, 78199 Bräunlingen (DE)
(74) Vertreter: Neunert, Peter Andreas

(56) Entgegenhaltungen:
- EP-A- 0 259 181
- EP-A- 0 283 912
- EP-A1- 1 589 063
- DE-A1- 19 623 962
- US-A- 5 492 614

## Beschreibung

Die vorliegende Erfindung betrifft ein Tauchlacksystem für eine anodische Elektrotauchlackierung, bestehend aus einem Bindemittel auf Basis mindestens eines säuregruppehaltigen Polymers, mindestens einem Melaminharz als Vernetzungsmittel, mindestens einem organischen Amin als Neutralisationsmittel und mindestens einem Alkohol als Lösungsmittel, sowie die Verwendung des Tauchlacksystems zur Beschichtung von Druckgusslegierungen auf Basis von Magnesium und/oder Aluminium.

Die Elektrotauchlackierung ist ein Verfahren zur Beschichtung von elektrisch leitfähigen Untergründen mit wasserlöslichen Lacken, sogenannten Elektrotauchlacken. Dabei wird in einem Lackbad zwischen dem eingetauchten Werkstück und einer Gegenelektrode ein elektrisches Gleichspannungsfeld angelegt, wobei im Falle der anodischen Elektrotauchlackierung das Werkstück als Anode bzw. Pluspol geschaltet wird.

Gattungsgemäße Tauchlacksysteme werden in der DE 196 23 962 A1, der US 5,492,614 A und der EP 0 259 181 A2 beschrieben. In der EP 0 283 912 A2 ist ein Verfahren zur Umformung von Blechen in Anwesenheit eines Kühl- und Schmiermittels beschrieben, wobei das Kühl- und Schmiermittel eine wässrige Emulsion eines lackfilmbildenden Bindemittels ist. Weder Kühl- oder Schmiermittel noch die anderen in den oben genannten Schriften beschriebenen Systeme sind für eine anodische Elektrotauchlackierung zur Beschichtung von Druckgusslegierungen auf Basis von Magnesium und/oder Aluminium besonders geeignet. Bei der anodischen Elektrotauchlackierung enthält das Bindemittel säuregruppehaltige Polymere, die durch Neutralisation mit Aminen in Salzform vorliegen und somit in einen wasserlöslichen Zustand überführt werden. In der Nähe der Elektrode entstehen aufgrund der Hydrolyse bei der anodischen Tauchlackierung Wasserstoffionen, die mit dem Bindemittelsalz reagieren, wobei die funktionalisierten Bindemittel ihre Salzform verlieren und damit wasserunlöslich werden und an der Oberfläche des Werkstückes koagulieren. Die Umsetzung zur Abscheidung der Lackschicht auf der Oberfläche findet in einem dünnen, anhaftenden Flüssigkeitsfilm, der sogenannten Diffusionsschicht, statt. Die Bindemittelteilchen werden zusammen mit den im Bindemittel eingehüllten Pigmenten durch Strömung und Konvektion an diese Diffusionsschicht herangebracht, die in der Regel eine Schichtdicke zwischen 100 µm und 1000 µm aufweist. In der Diffusionsschicht selber erfolgt der Weitertransport der Teilchen über die Elektrophorese.

Bei der anodischen Elektrotauchlackierung werden an der Phasengrenze zwischen Werkstück und Lack durch die Elektrolyse des Wassers Wasserstoffionen frei, die in die Grenzschicht hineinwandern und dort die Wasserstoffionenkonzentration erhöhen, wobei es zu einer Koagulation des Bindemittels kommt. Durch den Aufbau der Bindemittelschicht auf dem Werkstück wird das zu beschichtende Werkstück immer stärker isoliert und der nachlassende Stromfluss führt zu einer verminderten Bildung von Wasserstoffionen, sodass der pH-Wert im Grenzbereich wieder auf den ursprünglichen Wert ansteigt und die Koagulation bzw. die Beschichtung gestoppt wird. Auf diese Weise gelingt es, extrem dünne und exakt eingestellte Schichtdicken zu realisieren.

Ein weiterer Vorteil der Elektrotauchlackierung gegenüber der konventionellen Pulverlackierung besteht darin, dass mit der Elektrotauchlackierung auch schwer zugängliche Stellen des Werkstückes einheitlich lackiert werden, was darauf zurückzuführen ist, dass die Abscheidung des Bindemittels zunächst an Stellen hoher Feldstärke stattfindet, wobei der sich bildende Film einen hohen elektrischen Widerstand aufweist, sodass sich die Feldlinien zu anderen Bereichen des Werkstückes verschieben und spätestens am Schluss des Beschichtungsvorganges auch die unzugänglichen Stellen gleichmäßig beschichtet werden.

Die anodische Tauchlackierung wird für spezielle Einsatzgebiete und Materialien angewandt und eignet sich insbesondere für die Decklackierung von Nichteisen-Metallen.

Nachdem der Lackfilm abgeschieden ist, wird das anhaftende, nicht koagulierte Badmaterial abgespült und man lässt den abgeschiedenen Lackfilm, der in der Regel einen Feststoffgehalt von über 90% hat, eine kurze Zeit abdunsten. Durch den anschließenden Einbrennvorgang bei ca. 120 °C - 180 °C wird die Elektrotauchlackierung vollendet. Beim Einbrennen werden die einzelnen Bindemittelkomponenten miteinander vernetzt.

Bei der anodischen Elektrotauchlackierung besteht der wichtigste Vernetzungsmechanismus in einer Polykondensation zwischen einem Melamin-Formaldehydharz und dem Hydroxy- bzw. Carboxy-funktionellen Stammharz. Durch das Einbrennen selber erzielt man eine homogene, glatte und korrosionsresistente Oberfläche, die nahezu keine Schichtdickenstreuung aufweist.

Ein weiterer Vorteil der Elektrotauchlackierung besteht in der aufgrund der weitgehenden Abwesenheit von organischen Lösungsmitteln basierenden Umweltverträglichkeit des Verfahrens, so dass die anodische Elektrotauchlackierung sich somit als ein ökonomisch und ökologisch äußerst interessantes Beschichtungsverfahren anbietet.

Das Verfahren findet praktische Anwendung insbesondere in der Serienlackierung von elektrisch leitfähigen Oberflächen, insbesondere Metalloberflächen, bspw. zur Grundierung und Ein-Schicht-Lackierung von Haus- und Elektrogeräten, Stahlmöbeln, Bauelementen, Bau- und Landmaschinen, Automobilkarossen und Automobilzubehörteilen. Bei all diesen Werkstücken spielt die Korrosionsbeständigkeit eine außerordentlich große Rolle und die Qualität einer Beschichtung bzw. eines Elektrotauchlacksystems wird häufig über die Korrosionsbeständigkeit, die bspw. mit Hilfe einer Salzsprühnebelprüfung nach DIN EN ISO 9227 durchgeführt wird, beurteilt.

Zur Verbesserung der Korrosionsbeständigkeit der Beschichtungen werden den Elektrotauchlacken häufig korrosionsverhindernde Pigmente, wie z. B. Blei- oder Chromverbindungen, zugesetzt. Diese Verbindungen sind toxisch und aus Gesundheits- und Umweltgesichtspunkten nicht erwünscht. Alternativ eingesetzte, weniger toxische Pigmente, wie z. B. Zinkphosphate oder Aluminiumphosphate, ergeben keine befriedigenden Korrosionsschutzergebnisse, was teilweise darauf zurückzuführen ist, dass diese Verbindungen in den Elektotauchlackbädern zu Instabilitäten führen.

In der DE 199 60 693 A1 wird ein Verfahren zur anodischen Tauchlackierung beschrieben, bei dem der Elektrotauchlack 1 - 15 Gew.-%, bezogen auf den Bindemittelfestkörper, eines oder mehrerer Phosphorsäure-Epoxyester oder Phosphonsäure-Epoxyester enthält, um die Korrosionsschutzergebnisse, insbesondere den Kantenschutz, zu verbessern. Mit diesem Verfahren können beschichtete Werkstücke hergestellt werden, die in einem Salzsprühtest nach 120 Stunden keinen Flächenrost und nur einen relativ geringen Kantenrost zeigen.

Somit werden durch den Zusatz von Phosphorsäure- oder Phosphonsäure-Epoxyester gegenüber den konventionellen Tauchlacksystemen erhebliche Vorteile in der Korrosionsbeständigkeit erzielt, dennoch wird gerade für Karosserieteile von Automobilen oder Zubehörteile für Automobile eine extrem hohe Karosseriebeständigkeit gefordert, sodass eine ständige Weiterverbesserung der Korrosionsbeständigkeit von Beschichtungen derartiger Teile gefordert wird.

Der vorliegenden Erfindung lag daher die Aufgabe zugrunde, ein anodisches Tauchlacksystem bereit zu stellen, mit dessen Hilfe eine weiter verbesserte Korrosionsbeständigkeit erreicht wird.

Überraschenderweise wurde gefunden, dass diese Aufgabe durch ein anodisches Tauchlacksystem gemäß Anspruch 1 gelöst wird.

Die vorliegende Erfindung betrifft somit ein Tauchlacksystem für eine anodische Elektrotauchlackierung, das ein Bindemittel auf Basis mindestens eines säuregruppenhaltigen Polymers als Filmbildner, mindestens ein Melaminharz als Vernetzungsmittel, mindestens ein organisches Amin als Neutralisationsmittel, mindestens einen Alkohol als organisches Lösungsmittel und darüber hinaus mindestens ein Entgasungsmittel enthält.

Besonders geeignete Entgasungsmittel sind Polypropylenwachse und Polyethylenwachse. Weitere vorteilhafte Entgasungsmittel sind Polyether, Polysiloxane und Polydimethylsiloxane. Darüber hinaus können auch nicht ionogene Emulgatoren oder Tenside, aber auch modifizierte Rhizinusölderivate vorteilhaft eingesetzt werden. Die Wirkung dieser Stoffe beruht möglicherweise darauf, dass die Vernetzung des Bindemittels verzögert wird, so dass die bei der Erwärmung während der Tauchlackierung an der zu beschichtenden Oberfläche anhaftenden oder eingeschlossenen Gase noch vor der Vernetzung des Bindemittels freigesetzt werden können und somit anschließend eine durch Gase ungehinderte Abscheidung des Bindemittels gewährleistet ist. Dabei hat sich herausgestellt, dass eine Menge von 0.2 - 2 %, bezogen auf das Pastenvolumen, eine ausreichend entgasende Wirkung besitzt, um zu verhindern, dass es bei der Abscheidung des Bindemittels auf der leitenden Oberfläche zu Einschlüssen von Gasen kommt, die die Abscheidung der Lackschicht behindern und nach dem Einbrennen des Lackes zu einer Poren- oder Blasenbildung bzw. Ausblühungen führen. Derartige Blasen, Poren oder Ausblühungen sind erfahrungsgemäß besonders anfällig für den Angriff von Korrosion.

Geeignete Bindemittel für die anodische Elektrotauchlackierung sind die üblichen Bindemittelsysteme mit einer Säurezahl von 20 - 150 und einer Hydroxidzahl von 0 - 150, wobei gefunden wurde, dass mit einer Bindemittelmischung aus mindestens einem Epoxidharz mit mindestens einem Acrylatharz besonders gute Ergebnisse erzielt werden. Das Mischungsverhältnis von Acrylatharz zu Expoxidharz beträgt vorzugsweise zwischen 60 : 40 bis 90 : 10. Besonders geeignete Acrylatharze sind Carboxyl- und Hydroxylgruppen umfassende phenol- oder styrolmodifizierte Acrylatharze mit einer Säurezahl zwischen 50 und 100. Als Epoxidharze kommen Diglycidylether auf Basis von Polyphenolen, wie z. B. Bisphenol-A oder Bisphenol-F, mit mehrwertigen Alkoholen, wie z. B. Ethylenglykol, Diethylenglykol, Triethylenglykol, 1,2-Proplylenglykol, 1,5-Pentadiol, 1,2,6-Hexatriol, Glycerin etc., sowie von Polycarbonsäuren, wie z. B. Oxalsäure, Bernsteinsäure, Glutarsäure, Terephthalsäure, 2,6-Naphtalindicarbonsäure etc. ebenso wie Hydantoinepoxide, epoxidiertes Polybutadien sowie Di-Epoxidverbindungen auf Basis von olefinisch ungesättigten alicyclischen Verbindungen in Frage.

Das Bindemittel bzw. die Bindemittelmischung wird mit einem Vernetzungsmittel, vorzugsweise einem Melaminharz, ausgewählt aus der Gruppe Methanol-, Butanol-, Isobutanol- und/oder mischveretherte Melaminharze, versetzt, wobei der Anteil an Melaminharz bezogen auf das Bindemittel ca. 10 - 30 Gew.-% beträgt. Diese Mischung aus Bindemittel und Vernetzungsmittel wird mit einem organischen Amin, ausgewählt aus der Gruppe Diethylamin, Triethylamin, Morpholin, Dimethylethanolamin, Diisopropanolamin, Dimethylamino-2-methylpropanol und/oder Triisopropanolamin neutralisiert.

Der Elektrotauchlack enthält neben destilliertem Wasser, das die disperse Phase des Elektrotauchlackes bildet, in geringen Anteilen organische Lösungsmittel, die die Funktion haben, das zunächst wasserunlösliche Bindemittel zu lösen und darüber hinaus eine Co-Löserfunktion im wässrigen Medium des Tauchbades besitzen. Das organische Lösungsmittel umfasst einen Alkohol ausgewählt aus der Gruppe n-Propanol, Iso-Propanol, Iso-Butanol, Butylglykol, Butyldiglykol, Propylheptanol, Iso-Decanol und/oder IsoTridecanol. Je nach Verwendungszweck des Elektrotauchlacksystems werden zu dieser Mischung aus Bindemittel, Vernetzungsmittel und Lösungsmittel sonstige Additive, ausgewählt aus der Gruppe Pigmente, wie z. B. synthetisch hergestellte Ruße, Titandioxid und/oder Aluminiumsilikatpigmente, Füllstoffe, Netzmittel, Entschäumer, Korrosionsinhibitoren und/oder Weichmacher zugesetzt. Zusammen mit den sonstigen Additiven wird an dieser Stelle auch das Entgasungsmittel aus der Gruppe Polyethylenwachs, Polypropylenwachs, Polydimethylsiloxan, Polyether, Polysiloxan, nicht ionogene Emulgatoren und/oder modifizierte Rhizinusölderivate zugesetzt. Die Zugabe dieser Additive erfolgt in der Regel unter laufendem Dissolver und die so entstandene Pigmentpaste wird anschließend mit vorentsalztem Wasser verdünnt, bevor die Paste dann auf einer Perlmühle weiter zerkleinert wird, um eine Kornfeinheit von vorzugsweise < 15 µm zu erreichen.

Der Festkörpergehalt einer Pigmentpaste liegt üblicherweise zwischen 50 - 70 Gew.-%. Aus dieser konzentrierten Paste wird dann das sogenannte Elektrotauchbad mit ca. 12 - 18 Gew.-% Feststoffanteil hergestellt, in dem die Elektrotauchlackierung stattfindet.

### Beispiel 1 (Herstellung einer schwarzen Pigmentpaste)

In einem geeigneten Gefäß werden 62.5 Gewichtsanteile eines thermisch vernetzbaren phenolharzmodifizierten Acrylatharzes (70%ige Lösung) mit 7.9 Gewichtsanteilen eines Melaminharzes (90%ige Lösung) und 4.5 Gewichtsanteilen eines hochsiedenden Alkohols sowie 0.6 Gew.-Anteilen Polyglykolether mit Hilfe eines Dispergators vermischt. Diese Mischung wird anschließend mit 3 Gewichtsanteilen Dimethylethanolamin neutralisiert und es werden unter laufendem Dissolver 7.6 Gewichtsanteile Kaolin, 1 Gewichtsanteil amorpher Ruß und 1 Gewichtsanteil Polyethylenwachs zugegeben. Nach Zugabe der Additive wird die Mischung weitere 10 Minuten mit Hilfe des Dispergators homogenisiert. Anschließend werden 11.9 Gewichtsanteile vollentsalztes Wasser hinzugegeben und es wird für weitere 10 Minuten gerührt. Die so erhaltene Pigmentpaste wird dann in einer Perlmühle weiter dispergiert, bis eine Kornfeinheit von < 15 µm erreicht ist. Der Festkörperanteil der so hergestellten Pigmentpaste liegt bei 60.5 Gew.-%.

Zur Herstellung eines Elektrotauchlackbades werden 21.5 Gewichtsanteile der Pigmentpaste mit 8.5 Gewichtsanteilen vollentsalztem Wasser vermischt. Zu dem dabei entstehenden sogenannten Wasserberg werden anschließend unter Rühren weitere 70 Gewichtsanteile vollentsalztes Wasser hinzugegeben. Nach einer Ruhezeit von mindestens 24 Stunden bei leichter Umwälzung des Bades ist das Elektrotauchlackbad einsatzbereit. Das Elektrotauchlackbad besitzt einen Festkörperanteil von 13 Gew.-%, eine Aminzahl von 50 und einen pH-Wert von 9,1.

### Beispiel 2 (Herstellung einer schwarzen Pigmentpaste)

In einem Reaktionsgefäß werden 40 Gewichtsanteile eines thermisch vernetzbaren Acrylatharzes (70%ige Lösung) mit 17.1 Gewichtsanteilen eines Bisphenolharzes (70%ige Lösung) und 10 Gewichtsanteilen eines Melaminharzes (90%ige Lösung) sowie 2.8 Gewichtsanteilen eines hochsiedenden Alkohols und 0.6 Gewichtsanteilen Polyglykolether mit Hilfe eines Dissolvers oder Dispergators vermischt. Die Mischung wird mit 1.5 Gewichtsanteilen Dimethylethanolamin neutralisiert und anschließend werden unter Rühren 5.6 Gewichtsanteile Kaolin, 1 Gewichtsanteil amorpher Ruß und 0.5 Gewichtsanteile Wachs sowie 0.8 Gewichtsanteile Polysiloxan zugegeben und es wird für weitere 10 Minuten gerührt. Zu dieser Mischung werden anschließend 20.1 Gewichtsannteile vollentsalztes Wasser zugegeben und die dabei entstehende Paste wird mit Hilfe einer Perlmühle bis zu einer Kornfeinheit von < 15 µm zerkleinert.

Auf diese Weise wird eine Pigmentpaste mit einem Feststoffgehalt von 57 Gew.-% und einer Aminzahl von 40 erhalten.

Zur Herstellung des Elektrotauchlackbades werden 21 Gewichtsanteile der Pigmentpaste mit 9 Gewichtsanteilen vollentsalztem Wasser vermischt. Nachdem das Wasser-Pastengemisch homogenisiert ist, werden weitere 70 Gewichtsanteile vollentsalztes Wasser unter Rühren hinzugegeben. Nach einer Ruhezeit von mindestens 24 Stunden bei leichtem Rühren ist das Elektrotauchlackbad mit einem Feststoffanteil von 13 Gew.-%, einer Aminzahl von 40 und einem pH-Wert von 8.5 einsatzbereit.

### Beispiel 3 (Herstellung einer schwarzen Pigmentpaste)

In einem Reaktionsgefäß werden 9 Gewichtsanteile vollentsalztes Wasser vorgelegt. Unter Rühren wird 1 Gewichtsanteil nicht-ionogenes Tensid zugegegeben und diese Mischung wird mit 60 Gewichtsanteilen eines epoxidmodifizierten Acrylatharzes (55%ige Lösung) versetzt. Unter Rühren wird anschließend mit 3 Gewichtsanteilen Dibutylamin neutralisiert. Nachdem weitere 10 Minuten dispergiert wurde, werden 8 Gewichtsanteile Bariumsulfat, 1 Gewichtsanteil hydrophobe Kieselsäure, 1 Gewichtsanteil Polydimethylsiloxan und 4 Gewichtsanteile Eisenoxid zugegeben. Anschließend wird weitere 15 Minuten gerührt, bevor eine Mischung aus 12 Gewichtsanteilen Melaminharz (80%ige Dispersion) mit 2 Gewichtsanteilen Butylglykol hinzugegeben wird. Nach weiterem 20-minütigem Dispergieren mit einem Dissolver wird die Paste in eine Perlmühle überführt und bis zu einer Kornfeinheit von < 15 µm vermahlen. Die so erhaltene Paste hat einen Festkörperanteil von 57 Gew.-% und eine Aminzahl von 80.

Zur Herstellung des Elektrotauchlackbades werden 21 Gewichtsanteile der Pigmentpaste mit einer Mischung von 10 Gewichtsanteilen vollentsalztem Wasser und 2 Gewichtsanteilen Triethylamin vermischt. Nachdem das Wasser-Pastengemisch homogenisiert ist, werden weitere 69 Gewichtsanteile vollentsalztes Wasser unter Rühren hinzugegeben. Nach einer Ruhezeit von mindestens 24 Stunden bei leichtem Rühren ist das Elektrotauchlackbad mit einem Feststoffanteil von 13 Gew.-%, einer Aminzahl von 50 und einem pH-Wert von 9.1 einsatzbereit.

### Beispiel 4 (Vergleichsbeispiel)

### (Herstellung einer schwarzen Pigmentpaste)

In einem geeigneten Gefäß werden 28.5 Gewichtsanteile eines thermisch vernetzbaren Acrylatharzes (65%ige Lösung) und 13 Gewichtsanteile Melaminharz (97%ige Lösung) mit 1.6 Gewichtsanteilen eines hochsiedenden Alkohols unter starkem Rühren mit Hilfe eines Dissolvers vermischt. Die Mischung wir unter Zugabe von 1.2 Gewichtsanteilen Dimethylamin neutralisiert. Unter Rühren werden 1 Gewichtsanteil Polyglykolether, 2.5 Gewichtsanteile Aluminiumsilikat, 2.5 Gewichtsanteile Bariumsulfat und 4 Gewichtsanteile amorpher Ruß hinzugegeben und es wird für mindestens weitere 10 Minuten dispergiert, bevor 6.7 Gewichtsanteile vollentsalztes Wasser hinzugegeben werden. Nach weiterem 10-minütigem Dispergieren werden 25 Gewichtsanteile einer vorneutralisierten 35%igen Acrylat-Dispersion hinzugegeben und die Mischung wird in eine Perlmühle überführt und dort auf eine Kornfeinheit < 15 µm zerkleinert. Die so erhaltene Paste hat einen Festkörperanteil von 57 Gew.-% und eine Aminzahl von 50.

Zur Herstellung des Elektrotauchlackbades werden 28.4 Gewichtsanteile der Pigmentpaste mit einer Mischung von 8 Gewichtsanteilen vollentsalztem Wasser vermischt. Nachdem das Wasser-Pastengemisch homogenisiert ist, werden weitere 70 Gewichtsanteile vollentsalztes Wasser unter Rühren hinzugegeben. Nach einer Ruhezeit von mindestens 24 Stunden bei leichtem Rühren ist das Elektrotauchlackbad mit einem Feststoffanteil von 15 Gew.-%, einer Aminzahl von 30 und einem pH-Wert von 8.3 einsatzbereit.

### Beispiel 5 (Tauchlackierung)

Mit den in den Beispielen 1 bis 4 beschriebenen Tauchlacken wurden unterschiedliche Werkstücke zu unterschiedlichen Bedingungen beschichtet. Die Abscheidungsbedingungen sowie die Prüfergebnisse sind in der Tabelle 1 zusammengefasst.

Tabelle 1

| Test | Testbedingungen | Tauchlack | Salzsprühtest (DIN EN ISO 9227) 1008 Stunden | | | |
|---|---|---|---|---|---|---|
| | | | Unterwanderung | Blasenbildung | Flächenrost | Kantenrost |
| 1 | Werkstück: Magnesiumdruckguss Vorbehandlung: Passivierung mit Silan-, Titan- und Zirkoniumfluoriden Beschichtungszeit: 2 Minuten; Beschichtungsspannung: 130 V Badtemperatur: 25 °C Einbrennbedingungen: 160 °C / 20 Minuten Schichtdicke: 24 - 26 µm | T1 | 0 mm | 0 S 0 | Ri 0 | KR 0 |
| | | T2 | 0.5 mm | 0 S 0 | Ri 0 | KR 0 |
| | | T3 | 0 mm | 0-1 S 0-1 | Ri 0 | KR 0 |
| | | T4 | 2 mm | 1 S 1 | Ri 2 | KR 1 |
| 2 | Werkstück: Magnesiumdruckguss Vorbehandlung: keine Beschichtungszeit: 2 Minuten Beschichtungsspannung: 130 V Badtemperatur: 25 °C Einbrennbedingungen: 130 °C / 20 Minuten Schichtdicke: 25 µm | T1 | 0 mm | 1 S 1 | Ri 0 | KR 0 |
| | | T2 | 1 mm | 1-2 S 2 | Ri 0 | KR 1-2 |
| | | T3 | 0 mm | 0-1 S 1 | Ri 0 | KR 0 |
| | | T4 | 4 mm | 2-3 S 3 | Ri 3 | KR 1-2 |
| | | | Salzsprühtest (DIN EN ISO 9227) 504 Stunden | | | |
| 3 | Werkstück: AZ91 (Al- und Zn-legierter Magnesiumdruckguss) Vorbehandlung: Passivierung mit Silan-, Titan- und Zirkoniumfluoriden Beschichtungszeit: 2 Minuten Beschichtungsspannung: 190 V Badtemperatur: 25 °C Einbrennbedingungen: 160 °C / 20 Minuten Schichtdicke: 24 - 26 µm | T1 | 0 mm | 0 S 0 | Ri 0 | KR 0 |
| | | T2 | 1 mm | 1 S 1 | Ri 0 | KR 1-2 |
| | | T3 | 0 mm | 0 S 0 | Ri 0 | KR 0-1 |
| | | T4 | 2.5 mm | 2 S 1 | Ri 1-2 | KR 2 |
| | | | Salzsprühtest (DIN EN ISO 9227) 120 Stunden | | | |
| 4 | Werkstück: AZ91 (AI- und Zn-legierter Magnesiumdruckguss) Vorbehandlung: keine Beschichtungszeit: 2 Minuten Beschichtungsspannung: 190 V Badtemperatur: 25 °C Einbrennbedingungen: 160 °C / 20 Minuten Schichtdicke: 24 - 26 µm | T1 | 2 mm | 1-2 S 3 | Ri 0 | KR 0 |
| | | T2 | 2.5 mm | 2 S 3 | Ri 0 | KR 2-3 |
| | | T3 | 0.5 mm | 2 S 1-2 | Ri 0 | KR 1 |
| | | T4 | 5mm | 3 S 3 | Ri 3-4 | KR 3 |

Zur Beurteilung der Qualität der Beschichtung bzw. der Korrosionsbeständigkeit wurden unterschiedliche Kriterien herangezogen, wobei die beschichteten Materialien für einen Zeitraum von 1008, 504 bzw. 120 Stunden einer Behandlung nach dem Salzsprühtest (DIN EN ISO 9227) unterzogen wurden.

Nach dieser Behandlung wurde die Unterwanderung der Lackschicht mit Rost an einer vor der Salzbehandlung generierten Fehlstelle (Anritzung) (nach DIN EN ISO 4628-8), die Blasenbildung (nach DIN EN ISO 4628-2), der Flächenrost Ri (nach DIN EN ISO 4628-3) und der Kantenrost KR (in Anlehnung an DIN EN ISO 4628-2 und -3) bestimmt. Die im Rahmen dieser Test bestimmten reinen Zahlenwerte entsprechen einer Bewertungsskala zwischen 0 und 5, wobei 0 = keine Korrosion und 5 = extreme Korrosionsbildung bedeutet. Bei der Blasenbildung wird sowohl die Blasenanzahl als auch die Blasengröße bewertet, während bei dem Flächen- und Kantenrost der prozentuale Anteil an korrodierter Fläche bewertet wird.

Aus den Ergebnissen der Tabelle 1 ist ersichtlich, dass durch den Zusatz von Entgasungsmitteln die Korrosionsbeständigkeit deutlich verbessert wird. Die besten Ergebnisse werden mit dem Tauchlack T1 nach Beispiel 1 erzielt, bei dem als Entgasungsmittel Polyethylenwachs zugegegeben wurde. Ebenfalls gute Ergebnisse werden mit dem Zusatz von Polydimethylsiloxan als Entgasungsmittel (Tauchlack T3 gemäß Beispiel 3) erzielt. Die Mischung aus Wachs und Polysiloxan (Tauchlack T2 gemäß Beispiel 2) schneidet etwas schlechtere ab, jedoch ist im Vergleich zu einem Tauchlack nach dem Stand der Technik ohne den Zusatz von Entgasungsmitteln (Tauchlack T4 gemäß Vergleichsbeispiel 4) immer noch eine deutliche Verbesserung zu sehen.

Die oben aufgeführten Beispiele wurden ausgewählt, um das Verbesserungspotenzial in Bezug auf die Korrosionsbeständigkeit von Beschichtungen in einem anodischen Tauchlacksystem zu demonstrieren, und sind nicht als Einschränkungen zu sehen.

## Patentansprüche

1. Tauchlacksystem für eine anodische Elektrotauchlackierung, umfassend
- ein Bindemittel auf Basis mindestens eines säuregruppenhaltigen Polymers als Filmbildner,
- mindestens ein Melaminharz als Vernetzungsmittel,
- mindestens ein organisches Amin als Neutralisationsmittel und
- mindestens einen Alkohol als organisches Lösungsmittel, wobei
das Tauchlacksystem mindestens ein Entgasungsmittel umfasst,
das ausgewählt ist aus der Gruppe Polyethylenwachs, Polypropylenwachs, Polydimethylsiloxan, Polyether, Polysiloxan, nicht ionogene Emulgatoren und/oder modifizierte Rhizinusölderivate,
**dadurch gekennzeichnet, dass**
- das Bindemittel eine Bindemittelmischung aus mindestens einem Epoxidharz und mindestens einem Acrylatharz umfasst,
- das säuregruppehaltige Polymer ein Carboxyl- und Hydroxylgruppen umfassendes phenol- oder styrolmodifiziertes Acrylatharz mit einer Säurezahl zwischen 50 - 100 umfasst, und
- das Epoxidharz eine Verbindung ausgewählt aus der Gruppe Diglycidylether auf Basis von Polyphenolen, wie z.B. Bisphenol A oder Bisphenol F, von mehrwertigen Alkoholen, wie z.B. Ethylenglykol, Diethylenglykol, Triethylenglykol, 1,2-Propylenglykol, 1,5-Pentadiol, 1,2,6-Hexatriol, umd Glycerin, und von Polycarbonsäuren, wie z.B. Oxalsäure, Bernsteinsäure, Glutarsäure, Terephthalsäure und, 2,6-Naphthalindicarbonsäure, Hydantoinepoxide, epoxidiertes Polybutadien sowie Diepoxidverbindungen auf Basis von olefinisch ungesättigten alicyclischen Verbindungen umfasst.

2. Tauchlacksystem nach Anspruch 1,
**dadurch gekennzeichnet, dass** das Vernetzungsmittel ein Melaminharz ausgewählt aus der Gruppe Methanol-veretherte Melaminharze, Butanolveretherte Melaminharze, Isobutanol-veretherte Melaminharze und/oder mischveretherte Melaminharze umfasst.

3. Tauchlacksystem nach einem der Ansprüche 1 bis 2,
**dadurch gekennzeichnet, dass** das Neutralisationsmittel ein organisches Amin ausgewählt aus der Gruppe Diethylamin, Triethylamin, Morpholin, Dimethylethanolamin, Diisopropanolamin, Dimethylamino-2-methylpropanol und/oder Triisopropanolamin umfasst.

4. Tauchlacksystem nach einem der Ansprüche 1 bis 3, **dadurch gekennzeichnet, dass**
das organische Lösungsmittel einen Alkohol ausgewählt aus der Gruppe n-Propanol, Iso-Propanol, Iso-Butanol, Butylglykol, Butyldiglykol, Propylheptanol, Iso-Decanol und/oder Iso-Tridecanol umfasst.

5. Tauchlacksystem nach einem der Ansprüche 1 bis 4,
**dadurch gekennzeichnet, dass**
das Tauchlacksystem ein oder mehrere zusätzliche Additive ausgewählt aus der Gruppe Pigmente, wie z.B. synthetisch hergestellte Ruße, Titandioxid und oder AluminiumSilikat-Pigmente, Füllstoffe, Netzmittel, Entschäumer, Korrosionsinhibitoren und/oder Weichmacher umfasst.

6. Verwendung eines Tauchlacksystems nach einem der Ansprüche 1 bis 5 zur Beschichtung von Druckgusslegierungen auf Basis von Magnesium und/oder Aluminium.

## Claims

1. A dip coating system for an anodic electro-dip coating, comprising
- a binder on the basis of at least one polymer, containing an acid group, as a film former,
- at least one melamine resin as a cross-linking agent,
- at least one organic amine as a neutralization agent and
- at least one alcohol as an organic solvent, wherein the dip coating system comprises at least one degassing agent which is selected from the group of polyethylene wax, polypropylene wax, polydimethylsiloxane, polyether, polysiloxane, non-ionogenic emulsifiers and/or modified castor oil derivatives,
**characterized in that**
- the binder comprises a binder mixture of at least one epoxy resin and at least one acrylate resin,
- the polymer containing an acid group comprises an acrylate resin comprising carboxyl and hydroxyl groups and modified with phenol or styrene and with an acid value of between 50 and 100, and
- the epoxy resin comprises a compound selected from the group of diglycidyl ether on the basis of polyphenols, such as for example bisphenol A or bisphenol F, of multivalent alcohols, such as for example ethylene glycol, diethylene glycol, triethylene glycol, 1,2-propylene glycol, 1,5-pentadiol, 1,2,6-hexatriol and glycerol, and of polycarboxylic acids, such as for example oxalic acid, succinic acid, glutaric acid, terephthalic acid and 2,6-naphthalenedicarboxylic acid, hydantoin epoxides, epoxidized polybutadiene and diepoxide compounds on the basis of olefinic unsaturated alicyclic compounds.

2. A dip coating system according to claim 1, **characterized in that** the cross-linking agent comprises a melamine resin selected from the group of methanol-etherified melamine resins, butanol-etherified melamine resins, isobutanol-etherified melamine resins and/or mixed etherified melamine resins.

3. A dip coating system according to one of claims 1 to 2, **characterized in that** the neutralization agent comprises an organic amine selected from the group of diethylamine, triethylamine, morpholine, dimethylethanolamine, diisopropanolamine, dimethylamino-2-methylpropanol and/or triisopropanolamine.

4. A dip coating system according to any one of claims 1 to 3, **characterized in that** the organic solvent comprises an alcohol selected from the group of n-propanol, isopropanol, isobutanol, butyl glycol, butyl diglycol, propyl heptanol, isodecanol and/or isotridecanol.

5. A dip coating system according to any one of claims 1 to 4, **characterized in that** the dip coating system comprises one or more further additives selected from the group of pigments, such as for example synthetically produced carbon blacks, titanium dioxide and/or aluminium silicate pigments, fillers, wetting agents, defoaming agents, corrosion inhibitors and/or softening agents.

6. Use of a dip coating system according to any one of claims 1 to 5 for coating die-casting alloys on the basis of magnesium and/or aluminium.

## Revendications

1. Système de vernis au trempé pour un procédé d'électro-vernissage au trempé anodique renfermant :
- un liant à base d'au moins un polymère renfermant des groupes acide en tant qu'agent filmogène,
- au moins une résine mélamine en tant qu'agent de réticulation,
- au moins une amine organique en tant qu'agent de neutralisation, et
- au moins un alcool en tant que solvant organique,
ce système de vernis au trempé renfermant au moins un agent de dégazage choisi dans le groupe formé par les composés suivants : cire de polyéthylène, cire de polypropylène, polydiméthylsiloxane, polyéther, polysiloxane, agents émulsifiants non ionogènes et/ou dérivés d'huile de ricin modifiée,
**caractérisé en ce que**
- le liant renferme un mélange de liants à base d'au moins une résine époxyde et d'au moins une résine acrylique,
- le polymère renfermant des groupes acide renferme une résine acrylique modifiée par du phénol ou du styrène comportant des groupes carboxyle et hydroxyle, avec un indice d'acide compris entre 50 et 100, et
- la résine époxyde renferme un composé choisi dans le groupe formé par les composés suivants : diglycidyléther à base de polyphénols, tel que par exemple le bisphénol A ou le bisphénol F, de polyalcools tels que par exemple l'éthylène glycol, le diéthylène glycol, le triéthylène glycol, le 1,2-propylène glycol, le 1,5-pentadiol, le 1,2,6-hexatriol, et la glycérine, et d'acides polycarboxyliques tels que par exemple l'acide oxalique, l'acide succinique, l'acide glutarique, l'acide téréphthalique, et l'acide 2,6-naphthalinodicarboxylique, hydantoinepoxyde, polybutadiène époxydé et composés diépoxydés à base de composés alicycliques à insaturation oléfinique.

2. Système de vernis au trempé conforme à la revendication 1,
**caractérisé en ce que**
l'agent de réticulation renferme une résine mélamine choisie dans le groupe formé par les composés suivants : résines mélamine éthérifiées avec du méthanol, résines mélamine éthérifiées avec du butanol, résines mélamine éthérifiées avec de l'isobutanol et/ou résines mélamine à éthérification mixte.

3. Vernis au trempé conforme à l'une des revendications 1 et 2,
**caractérisé en ce que**
l'agent de neutralisation renferme une amine organique choisie dans le groupe formé par les amines suivantes : diéthylamine, triéthylamine, morpholine, diméthyléthanol amine, diisopropanol amine, diméthylamino-2-méthylpropanol et/ou triisopropanol amine.

4. Système de vernis au trempé conforme à l'une des revendications 1 à 3,
**caractérisé en ce que**
le solvant organique renferme un alcool choisi dans le groupe formé par les alcools suivants : n-propanol, iso-propanol, iso-butanol, butyl glycol, le butyldiglycol, propylheptanol, iso-décanol et/ou iso-tridécanol.

5. Système de vernis au trempé conforme à l'une des revendications 1 à 4,
**caractérisé en ce qu'**
il renferme au moins un additif supplémentaire choisi dans le groupe formé par les composés suivants : pigments tels que par exemple le noir de carbone obtenu par synthèse, le dioxyde de titane et/ou les pigments aluminium-silicate, charges, agents de réticulation, agents antimousse, inhibiteurs de corrosion et/ou plastifiants.

6. Utilisation d'un système de vernis au trempé conforme à l'une des revendications 1 à 5, pour le revêtement d'alliages à coulée sous pression à base de magnésium et/ou d'aluminium.
